# EUROPEAN PATENT APPLICATION

(11) **EP 2 377 799 A1**
(43) Date of publication of application: **19.10.2011**
(21) Application number: 11162288.2
(22) Date of filing: 13.04.2011
(51) Int. Cl.: B66C 13/16, B66D 1/58, G01L 1/26, G01L 5/06

(54) **Winch for detecting the load applied**

(30) Priority: 15.04.2010 IT MO20100115
(71) Applicant: Dinamic Oil S.p.a., 41030 Bomporto (MO) (IT)
(72) Inventor: Dell'Anna, Ilarione, 40121 Bologna (IT)
(74) Representative: Modiano, Micaela Nadia

(57) **Abstract**

A winch (1) for detecting the load applied, comprising a structure (2) for supporting a drum (3) which can rotate about its own longitudinal axis (A) and on which a flexible traction element (4) is wound which can be connected to a load to be moved, the structure (2) comprising a footing (5) which is associated with a portion (6) that can be moved with respect to it and is provided with a pair of supporting shoulders (7), each shoulder being coupled rotoidally to a respective end of the drum (3), and force transducer means (9) which are associated with the footing (5) at the exit side of the flexible element (4) and are arranged in contact with at least one corresponding probe assembly (10) which is associated with the movable portion (6) in the configuration in which the winch is not loaded, in order to detect a force value that corresponds to no load.

The movable portion (6) is mated with the footing (5) by means of the interposition of at least one pair of linkages (11), so as to define at least one articulated quadrilateral, which can move on a plane that is substantially perpendicular to the longitudinal axis (A) of the drum (3) and is constituted by the footing (5), the at least one pair of linkages (11) and the movable portion (6), the movable portion (6) being able to oscillate with respect to the footing (5) between the unladen winch configuration and a laden winch configuration, in which the probe assembly (10) is pressed against the transducer means (9) so as to obtain the detection of a force value that can be converted into an applied load value.

## Description

The present invention relates to a winch for detecting the load applied.

For a long time winches have been known, generally used for lifting or pulling loads by means of the interposition of a flexible traction element.

As is known a winch is essentially made up of a structure for supporting a drum, which can rotate about its own longitudinal axis, on which a flexible traction element is wound which has one end integral with the drum and the other end connectable to a load, and means of actuating the drum in rotation.

The structure is generally constituted by a pair of supporting shoulders which are rotoidally associated with the opposite ends of the drum and by a footing, connected to them, for fixing a machine or an apparatus to the frame.

According to the needs of the specific application, the winch can be equipped with a plurality of accessory assemblies for the execution of determined functions.

In particular, in order to enable the detection of the load applied and/or the signaling of the exceeding of a load limit value, it is known to equip the winch with transducers for sending a PLC computer a signal which, appropriately processed, is converted to a value corresponding to the load applied to the flexible element.

A first solution of this type consists in implementing a winch provided with a rigid supporting structure, i.e. with the supporting shoulders rigidly connected to the footing, and providing, on the portion of the footing which is most subject to deformations, at least one strain gauge for detecting a value of the mechanical deformation of the footing as an effect of the action of the load applied to the flexible element. By means of PLC computers, it is known to process the deformation value in order to obtain a value corresponding to the load applied.

This system, however, is not free from drawbacks, in that the sensitivity of the transducer used makes the measurements obtained unreliable, and it does not make it possible to perform an exact detection of the applied load, but only to verify that a preset limit value is not exceeded.

To overcome these drawbacks, at least partially, a type of winch is known which is provided with a supporting structure made in two parts, of which one is provided with a degree of freedom in translational motion in a direction that is perpendicular to the rotation axis of the drum, with respect to the other part. In particular the fixed part of the supporting structure is constituted by the footing and the movable part comprises the supporting shoulders, which are associated with the footing by means of the interposition of sliders for sliding along the above mentioned direction. The system, furthermore, provides at least one load cell associated with the footing which is in contact with the movable part of the supporting structure at the exit side of the flexible element. Following the application of a load, the movable part of the supporting structure, together with the drum, tends to slide with respect to the footing and thus to press on the load cell. The force value detected by the load cell is processed by a PLC computer and translated to a value corresponding to the load applied.

However, such solution too is not free from drawbacks, in that as a function of the longitudinal position of the flexible element with respect to the drum, a shift thereof can occur in a direction that is not perfectly perpendicular with respect to its axis, with consequent difficult or erroneous detection by the load cells. In addition, the losses owing to the sliding friction that develops in the creeping of the movable part of the supporting structure with respect to the footing invalidate the detection.

The aim of the present invention is to eliminate the above mentioned drawbacks in the known art, by providing a winch for detecting the load applied which makes it possible to perform a reliable detection of the load applied independently of the conditions of use and of the positioning of the flexible traction element.

Within this aim, an object of the present invention is to reduce the error component in the measurement performed, in particular by reducing the phenomena of friction between fixed parts and movable parts.

A further object of the present invention is to enable a correct functioning of the winch in any condition of use.

A further object of the present invention is to provide a simple structure, that is easy and practical to implement, safe in use and effective in operation, and low cost.

This aim and these and other objects which will become better apparent hereinafter are achieved by the present winch for detecting the load applied which comprises a structure for supporting a drum which can rotate about its own longitudinal axis and on which a flexible traction element is wound which can be connected to a load to be moved, said structure comprising a footing which is associated with a portion that can be moved with respect to it and is provided with a pair of supporting shoulders, each shoulder being rotoidally coupled to a respective end of said drum, and force transducer means which are associated with said footing at the exit side of said flexible element and are arranged in contact with at least one corresponding probe assembly which is associated with said movable portion in the configuration in which the winch is not loaded, in order to detect a force value that corresponds to no load, characterized in that said movable portion is mated with said footing by means of the interposition of at least one pair of linkages, so as to define at least one articulated quadrilateral, which can move on a plane that is substantially perpendicular to the longitudinal axis of said drum and is constituted by said footing, said at least one pair of linkages and said movable portion, the movable portion being able to oscillate with respect to the footing between said unladen winch configuration and a laden winch configuration, in which the probe assembly is pressed against said transducer means so as to obtain the detection of a force value that can be converted into an applied load value.

Further characteristics and advantages of the present invention will become better apparent from the detailed description of two preferred, but not exclusive, embodiments of a winch for detecting the load applied, illustrated by way of non-limiting example in the accompanying drawings wherein:
Figure 1 is a schematic front view of a first embodiment of a winch for detecting the load applied according to the invention;
Figure 2 is a schematic side view of the winch in Figure 1;
Figure 3 is a partially sectional schematic view taken along the line III-III in Figure 2;
Figure 4 is a schematic side view of a second embodiment of the winch according to the invention, partially sectional.

With reference to the figures, the reference numeral 1 generally designates a winch for detecting the load applied.

The winch 1 comprises a structure 2 for supporting a drum 3 which can rotate about its own longitudinal axis A and on which a flexible traction element 4 is wound, of the type of a cable, a chain or the like, which can be connected to a load to be moved.

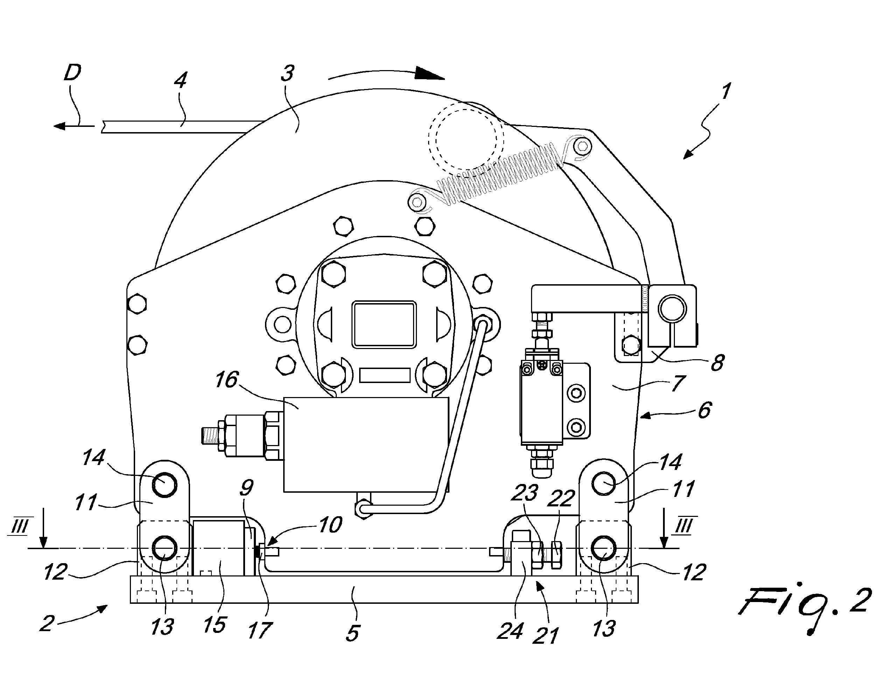

In the present description, the "exit direction" of the flexible element 4, designated with the arrow D in Figures 2-4, is defined as an ideal direction according to which the element itself unwinds from the drum 3 under the action of a load.

It should be noted that, depending on the way in which the flexible element 4 is wound on the drum 3, the portion connected to the load could unwind from the upper part or from the lower part of the drum.

The structure 2 comprises a footing 5 which is associated with a portion 6 that can be moved with respect to it and is provided with a pair of supporting shoulders 7, each of which is rotoidally coupled to a respective end of the drum 3.

The movable portion 6 can also be provided with one or more stiffening crosspieces 8 interposed between the shoulders 7.

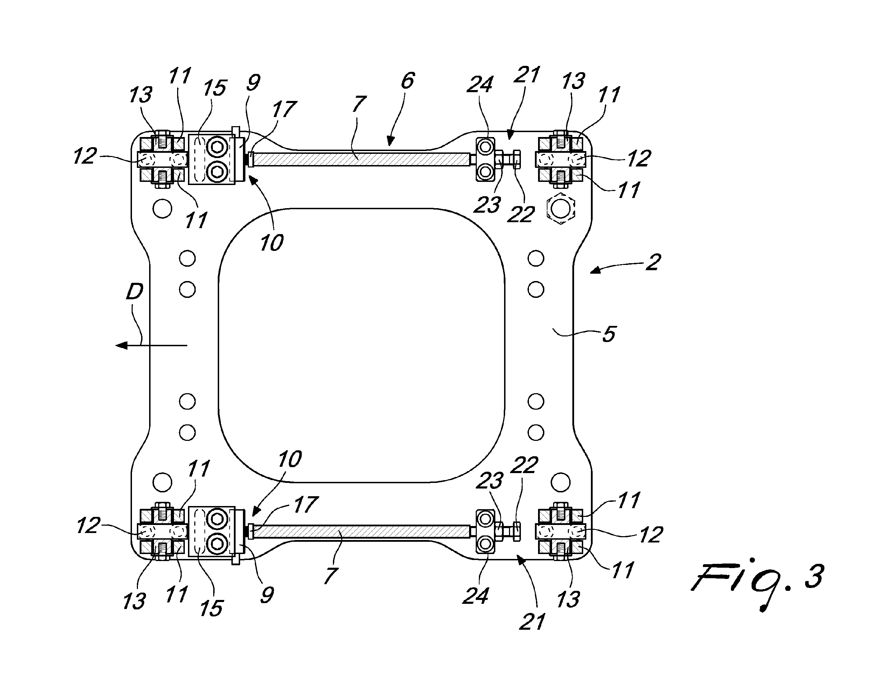

The footing 5 is adapted to be fixed to a work vehicle or to any apparatus and can be constituted by a contoured plate (Figure 3) or by two plates arranged parallel to the exit direction D, optionally mutually connected by transversal bars.

The winch 1 further comprises force transducer means 9 which are associated with the footing 5 at the exit side of the flexible element 4 and are arranged in contact with at least one corresponding probe assembly 10 which is associated with the movable portion 6. The transducer means 9 and the probe assembly 10 are mutually arranged in contact in the configuration in which the winch is not loaded in order to detect a force value that corresponds to no load.

According to the invention the movable portion 6 is coupled to the footing 5 by the interposition of at least one pair of linkages 11, of which each has the opposite ends pivoted, one to the footing 5 and the other to the movable portion 6, so as to define at least one articulated quadrilateral that is movable on a plane that is substantially perpendicular, allowing for tolerances, to the longitudinal axis A and is constituted by footing 5, linkages 11 and movable portion 6.

The movable portion 6, together with the drum 3, can therefore oscillate with respect to the footing 5 between the unladen winch configuration and a laden winch configuration in which the probe assembly 10 is pressed against the transducer means 9 so as to obtain the detection of a force value that can be converted into an applied load value.

Advantageously the linkages 11 have the same length so that the above mentioned articulated quadrilateral is an articulated parallelogram and the movable portion 6 describes a trajectory that is parallel to the footing 5 in the oscillation between the unladen and laden winch configurations.

In this way a shift is obtained of the movable portion 6 and of the drum 3 which is perpendicular to the longitudinal axis A and the losses owing to the rolling friction are limited.

Preferably at least two pairs of linkages 11 are provided, mutually identical, of which each pair of linkages 11 is interposed between the footing 5 and a corresponding shoulder 7. The linkages 11 of each pair are aligned by twos in a direction parallel to the longitudinal axis A.

In the embodiment shown, each shoulder 7 is associated with the footing 5 by the interposition of two pairs of linkages 11, mutually identical and coupled by twos.

Fixed to the footing 5, by means of connection elements which are not shown since they are of known type, are four blocks 12 for supporting respective pairs of linkages 11. Each pair of linkages 11 is pivoted to the corresponding block 12 on a first pin 13 and to the corresponding shoulder 7 on a second pin 14. The pins 13 and 14 are arranged on opposite sides of the shoulder 7 and are parallel to the longitudinal axis A.

The transducer means 9 are adapted to be interfaced with a conventional PLC computer, not shown in the figures, for the processing of the force value detected and for the conversion thereof into a value corresponding to the applied load. Depending on the programming of the PLC computer it is, therefore, possible to monitor the applied load and/or to signal the exceeding of a preset limit value.

The transducer means 9 comprise at least one compression-type load cell of known type. In the embodiments shown, the transducer means 9 are provided with two compression-type load cells, of which each one is positioned in front of a respective shoulder 7 with respect to the exit direction D, two probe assemblies 10 then being provided each of which is associated with a respective shoulder 7 so as to make contact with the corresponding load cell 9.

Each load cell 9 is associated with a corresponding supporting element 15, which is fixed to the footing 5 by means of connection elements, not shown since they are of known type, and is interposed between the block 12 associated with the corresponding shoulder 7 at the exit side of the flexible element 4 and the corresponding probe assembly 10.

However, it is not ruled out that the transducer means 9 can be provided with a single load cell positioned on the footing 5 at the longitudinal midpoint of the drum 3, cooperating with a corresponding probe assembly 10 which is associated with the movable portion 6.

The winch 1 is generally provided with means for the actuation in rotation of the drum 3, of the type of an electric motor 16 which is coupled, by way of conventional transmission means, to one end of the drum and is supported by the corresponding shoulder 7.

However, it is not ruled out that the winch 1 can be manually actuated.

Also, the winch 1 can be provided with conventional accessory and/or safety assemblies, depending on the specific application, which are not detailed.

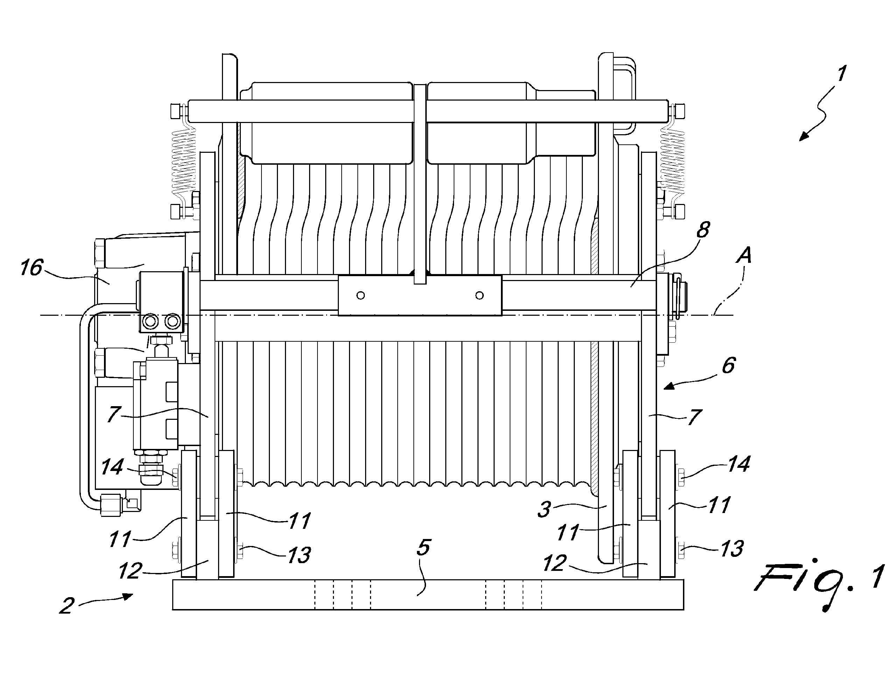

In a first embodiment the at least one probe assembly 10 is rigidly connected to the movable portion 6. In particular, with reference to Figures 1-3, each probe assembly 10 is rigidly connected to the front (with respect to the exit direction D) flank of a corresponding shoulder 7 and is constituted by a pivot 17 that is engaged in a seat defined in the shoulder itself and is arranged with the corresponding protruding head in contact with the corresponding load cell 9 in the unladen winch configuration.

In a second embodiment the at least one probe assembly 10 is of the adjustable position type so as to ensure the correct positioning in contact with the corresponding load cell 9. The at least one probe assembly 10 can, therefore, be provided with a first threaded element 18 which is associated with the movable portion 6 and is provided with a protruding head and is arranged in contact with the corresponding load cell 9, and a first locking nut 19 which is coupled to the first threaded element 18 and is arranged in abutment on the movable portion 6. In this case, it is possible to modify the axial position of the first threaded element 18 so as to position its head in contact with the corresponding load cell 9.

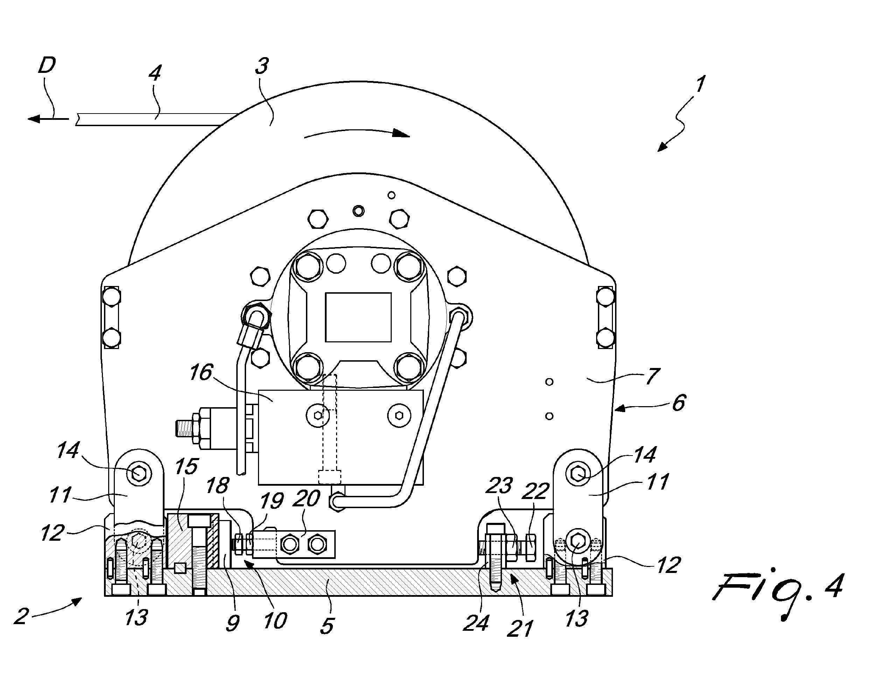

With particular reference to Figure 4, the movable portion 6 comprises a supporting body 20 that is associated with each shoulder 7, by means of connection elements which are not shown since they are of known type, in which the threaded seat is defined in which the first threaded element 18 of the corresponding probe assembly 10 is engaged. Once the longitudinal position of the first threaded element 18 has been adjusted, the first locking nut 19 is tightened so as to abut against the body 20.

In a possible alternative embodiment, not shown, the probe assembly 10 is defined integrally with the movable portion 6 and, with regard to the positioning of the transducer means 9, it can be constituted by a portion of a shoulder 7 or of the crosspiece 8 directly in contact with the transducer means in the unladen winch configuration.

Lastly, in order to enable the functioning of the winch 1 in any operational condition, it is possible to have at least one abutment assembly 21 which is associated with the footing 5 and is arranged in abutment against the movable portion 6 in the unladen winch configuration, so as to prevent its oscillation away from the transducer means 9.

The abutment assembly 21 can be rigidly connected to the footing 5, or it can be of the adjustable position type.

In this second case the abutment assembly 21 comprises a second threaded element 22 which is associated with the footing 5 and is arranged so that the end of the corresponding shank is in contact against the movable portion 6 in the unladen winch configuration, and a second locking nut 23 which is coupled to the second threaded element 22 and is arranged in abutment against the footing 5.

In the embodiments shown two abutment assemblies 21 of the adjustable position type are provided, each of which is arranged behind a corresponding shoulder 7 with respect to the exit direction D with the end of the corresponding second threaded element 22 in contact with the flank of the shoulder itself.

In more detail, the footing 5 comprises two supports 24 which are fixed to the base plate, by means of connection elements which are not shown since they are of known type, each of which is provided with a through threaded seat for coupling with the second threaded element 22 of the corresponding abutment assembly 21.

Once the longitudinal position of each second threaded element 22 has been adjusted with respect to the corresponding support 24, so as to bring the end of its shank in abutment with the rear flank of the corresponding shoulder 7, the corresponding second locking nut 23 is tightened so as to abut against the support itself.

In this way the winch 1 can also be installed in operating conditions in which the footing 5 is not kept horizontal.

Operation of the winch according to the present invention is the following.

Following the application of a load to the flexible element 4, the pulling action transmitted from the element to the drum 3 and then to the movable portion 6 causes an oscillation of these elements in the direction of approach to the transducer means 9.

By means of the probe assemblies 10, which are integral in the oscillation with the movable portion 6, a force is exerted on the transducer means 9 which is then detected and transmitted to a PLC computer in order to calculate a value corresponding to the load applied and optionally to signal the exceeding of a preset limit value.

It should be noted, lastly, that the system comprised of the supporting structure 2, the transducer means 9, at least one probe assembly 10 and, optionally, at least one abutment assembly 21 can be provided in kit form and be applied to any type of drum 3.

In practice it has been found that the invention as described achieves the intended aim and objects and, in particular, attention is drawn to the fact that the winch according to the invention ensures a correct detection of a force value indicative of the load applied independently of the operating conditions thereof and makes it possible to reduce the error component linked to the forces of friction that develop between fixed parts and movable parts.

The invention, thus conceived, is susceptible of numerous modifications and variations, all of which are within the scope of the appended claims.

Moreover, all the details may be substituted by other, technically equivalent elements.

In practice the materials employed, as well as the contingent dimensions and shapes, may be any according to requirements, but without for this reason extending beyond the scope of protection of the following claims.

The disclosures in Italian Patent Application No. MO2010A000115 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A winch (1) for detecting the load applied, comprising
- a structure (2) for supporting a drum (3), which can rotate about its own longitudinal axis (A) and on which a flexible traction element (4) is wound which can be connected to a load to be moved, said structure (2) comprising a footing (5) which is associated with a portion (6) that can move with respect to it and is provided with a pair of supporting shoulders (7), each shoulder being coupled rotoidally to a respective end of said drum (3), and
- force transducer means (9), which are associated with said footing (5) at the exit side of said flexible element (4) and are arranged in contact with at least one corresponding probe assembly (10), which is associated with said movable portion (6) in the configuration in which the winch is not loaded, in order to detect a force value that corresponds to no load, **characterized in that** said movable portion (6) is mated with said footing (5) by means of the interposition of at least one pair of linkages (11), so as to define at least one articulated quadrilateral, which can move on a plane that is substantially perpendicular to the longitudinal axis (A) of said drum (3) and is constituted by said footing (5), said at least one pair of linkages (11) and said movable portion (6), the movable portion (6) being able to oscillate with respect to the footing (5) between said unladen winch configuration and a laden winch configuration, in which the probe assembly (10) is pressed against said transducer means (9) so as to obtain the detection of a force value that can be converted into an applied load value.

2. The winch (1) according to claim 1, **characterized in that** the linkages (11) of said at least one pair have identical lengths, said articulate quadrilateral being an articulated parallelogram.

3. The winch (1) according to one or more of the preceding claims, **characterized in that** said probe assembly (10) is rigidly connected to said movable portion (6).

4. The winch (1) according to claim 1 or 2, **characterized in that** said probe assembly (10) is defined integrally with said movable portion (6).

5. The winch (1) according to claim 1 or 2, **characterized in that** said probe assembly (10) is of the type with an adjustable position.

6. The winch (1) according to claim 5, **characterized in that** said probe assembly (10) with adjustable position comprises a first threaded element (18), which is associated with said movable portion (6) and is provided with a head which is arranged in contact with said transducer means (9) and a first locking nut (19), which is coupled to said first threaded element (18) and is arranged in abutment against said movable portion (6).

7. The winch (1) according to one or more of the preceding claims, **characterized in that** it comprises at least one abutment assembly (21), which is associated with said footing (5) and is arranged in abutment against said movable portion (6) in the unladen winch configuration, so as to prevent its oscillation away from said transducer means (9).

8. The winch (1) according to claim 7, **characterized in that** said abutment assembly is of the type with adjustable position.

9. The winch (1) according to claim 8, **characterized in that** said abutment assembly with adjustable position comprises a second threaded element (22), which is associated with said footing (5) and is arranged so that the end of the corresponding shank is in contact against said movable portion (6) in the unladen winch configuration, and a second locking nut (23), which is coupled to said second threaded element (22) and is arranged in abutment against said footing (5).

10. The winch (1) according to one or more of the preceding claims, **characterized in that** said transducer means (9) comprise at least one compression-type load cell.

11. The winch according to claim 10, **characterized in that** said transducer means comprise two of said load cells (9), each arranged in front of a respective supporting shoulder (7) with respect to the exit direction (D) of said flexible element (4), two of said probe assemblies (10) being further provided, each assembly being associated with a respective supporting shoulder (7).

12. The winch (1) according to one or more of the preceding claims, **characterized in that** it comprises two of said abutment assemblies (21), each arranged to the rear of a respective supporting shoulder (7) with respect to the exit direction (D) of said flexible element (4).

13. The winch (1) according to one or more of the preceding claims, **characterized in that** it comprises at least two of said pairs of linkages (11), each of which is associated with a respective supporting shoulder (7), the linkages (11) of each pair being aligned, two by two, in a direction that is parallel to the longitudinal axis (A) of said drum (3).
